# EUROPEAN PATENT SPECIFICATION

(11) **EP 1 228 659 B1**
(45) Date of publication and mention of the grant of the patent: **14.02.2007**
(21) Application number: 99974175.4
(22) Date of filing: 09.11.1999
(51) Int. Cl.: H04Q 7/38

(54) **DATA TRANSMISSION METHOD AND NETWORK SYSTEM**
DATENÜBERTRAGUNGSMETHODE UND NETZWERK
PROCEDE DE TRANSMISSION DE DONNEES ET SYSTEME DE RESEAU

(43) Date of publication of application: 07.08.2002
(73) Proprietor: Nokia Corporation, 02150 Espoo (FI)
(72) Inventor: TUOMAINEN, Petri, FIN-02150 Espoo (FI); STAACK, Jens, FIN-02150 Espoo (FI); ROOKE, Michael, FIN-02150 Espoo (FI)
(74) Representative: TBK-Patent
(86) International application number: PCT/EP1999/008565
(87) International publication number: WO 2001/035689

(56) References cited:
- EP-A- 0 848 560
- US-A- 5 818 871
- US-A- 5 923 650

## Description

The present invention relates to a data transmission method and network system for supplying data, such as a multimedia message or a content from an origin server, to an end terminal.

In the next few years, multimedia applications will in full scale enter the world of cellular communications. To support new services, which will set new demands on the infrastructure for radio communications, a new wireless communication system needs to be developed. To meet these demands of wireless mobile communication in a true multimedia environment, high-speed packet data and Internet content bearer services play major roles.

The future of mobile telephony is now being determined by the global standardization work conducted by public authorities and the industry. Wireless Application Environment (WAE) is a result of the Wireless Application Protocol (WAP) efforts to promote industry-wide standards and specifications for developing applications and services that operate over wireless communication networks. WAE specifies an application frame work for wireless devices such as mobile telephones, pagers and PDAs (Personal Digital Assistants). The frame work extends and leverages other WAP technologies as well as other Internet technologies such as scripting and various content formats. The effort is aimed at enabling operators, manufacturers and content developers to meet the challenges of implementing advanced differentiating services and applications in a fast and flexible manner.

WAE adopts a model that closely follows the WWW (World Wide Web) model. All content is specified in formats that are similar to the standard Internet formats. The content is transported using standard protocols in the WWW domain and an optimized protocol similar to HTTP (Hyper Text Transfer Protocol) in the wireless domain. The WAE architecture allows all content and services to be hosted on standard Web origin servers. All content is located using WWW standard URLs (Uniform Resource Locators).

WAE enhances some of the WWW standards in ways that reflect the device and network characteristics. WAE extensions are added to support mobile network services such as call control and messaging. Careful attention is paid to the memory and CPU processing constraints that are found in mobile terminals. Support for low bandwidth and high latency networks is included in the architecture as well. WAE assumes the existence of a gateway functionality responsible for encoding and decoding data transferred from and to the mobile client. The purpose of encoding content delivered to the client is to minimize the size of data sent to the client over-the-air as well as to minimize the computational energy required by the client to process that data. The gateway functionality can be added to origin servers or placed in dedicated gateways.

In the mobile stations of the mobile network, a software or device, called user agent, is provided that interprets a network content referenced by a URL. This may include textual browsers, voice browsers, search engines and the like.

The user agent is connected to the mobile network using dedicated signalling connections. The origin server communicates with the client using the WAP protocol stack, may be connected to the mobile network, and is responsible for deploying content to its clients. In the case of call-handling, for example, the mobile network sets up the call to the client, the server delivers the event-handling content, and the user agent invokes the event-handler content and manages the presentation of the call-handling service to the user.

Moreover, in recent years, multimedia telephone terminals which can be connected to fixed networks have been developed. The terminals provide real-time video, audio, or data or any combination thereof, between two multimedia telephone terminals over a voiceband network connection. Communication may be either one-way or two-way. The multimedia telephone terminals can be integrated in PCs or workstations, or can be stand-alone units.

Interworking between PLMNs (Public Land Mobile Networks) and PSTNs (Public Switched Telephone Networks) is currently being specified in third generation mobile systems. Interworking with visual telephone systems or mobile radio networks is defined in the ITU-T video/multimedia recommendation H.324/M. In particular, different types of connections (or bearers) may be used to transmit a multimedia call via the mobile network. The call may be established as a HSCSD (High Speed Circuit Switched Data) call, a modem call or a UDI (Unrestricted Digital Information) call, or other connection or bearer types.

However, in case a content or multimedia message is retrieved by a user, the price, speed and preferences of the user are usually not taken into account during the downloading procedure. Furthermore, most end-users probably cannot or do not care about changing the bearer in mobile menus provided at the mobile terminal.

On the other hand, the network operator probably would like to control the use of bearer in order to utilize the network capacity in the best way. Moreover, in WAP or other Internet applications, the requirements for an optimal bearer may depend on the application.

Document US-A-5 818 871 discloses a system based on a progressive negotiation procedure, according to which a mobile station proposes an initial service configuration for establishing a connection. In the case that the base station cannot accept said configuration, it can propose an alternative configuration which is then analysed by the mobile station which can also propose a further alternative configuration if it cannot accept the alternative configuration proposed by the base station. This leads to a longer negotiation procedure and, in addition, it does not take into consideration the network load.

It is therefore an object of the present invention to provide a data transmission method and network system for providing a data content to an end terminal, by means of which the use of an optimal bearer for the data can be assured.

This object is achieved by a data transmission method as defined in claim 1.

Furthermore, the above object is achieved by a network system as defined in claim 14.

Additionally, the above object is achieved by a network element as defined in claim 24.

Further advantageous aspects and features are set out in the respective dependent claims.

Accordingly, a judgment of the data bearer to be used for supplying the data is performed, which may be based on a communication between the end-user and the network system, or which may be based on a network judgement performed by the network system. Thereby, a specific information relating to the data or message can be presented to the user for reference, such that the user may decide on the use of the bearer or the supplying of the data based on the specific information.

Furthermore, the network operator may affect the effectivity of the use of the network capacity based on its own preferences by using e.g. a bearer usage information in order to derive bearer-specific network capacity requirements. Thus, the responsibility about the data bearer selection is moved more to the operator. This may lead to a better usage of the network system, since the operator is the only party who really knows the network resources provided by the network system.

In particular, a new data bearer may be selected and a change to the new data bearer may be suggested by the network system. The new data bearer may be selected based on terminal capabilities at a receiving end. The suggestion of the bearer change may be based on a desired downloading speed and/or coverage restrictions. Thereby, the end terminal may be advised to switch to a less/more expensive bearer depending on the speed at which the user wishes to download the data, or any coverage restrictions such as moving out of the coverage area of a current bearer. The judging may be performed by adding a charge information to a notification of the data, wherein the data bearer may be judged at a receiving end based on the charge information. In particular, the charge information may comprise the message size and the cost for downloading the message or the cost per unit of data transferred. The charge information may be embodied in a header of the message. Thus, the user is presented with the message size for reference and a direct presentation of costs. Based on this information, the user may decide to accept or reject the data or message intended to be supplied. Hence, a capacity optimization can be performed if the terminal has the capability to change to a more optimized bearer based on e.g. the charge information provided. The data is then supplied using the data bearer if the data bearer is not rejected by the user.

Alternatively, the judging step may comprise acquiring a network information and judging the data bearer based on predetermined bearer selection parameters and the required network information. In particular, the network information may indicate a network load on different data bearers, and the predetermined bearer selection parameters may indicate a subscription type of an end-user, preferences of the service and/or preferences of the operator about bearers. Then, a change of the data bearer may be suggested, if the network information or the predetermined bearer selection parameters change. Thereby, a change of the data bearer may be initiated by the network operator to thereby enhance the effectivity of the usage of the network capacity.

The judging means and bearer selecting means may be arranged at a separate network element, such as a data bearer selection point, or may be arranged at a switching network element, or the like. Alternatively, the judging means may be arranged at the end terminal, and the bearer selecting means may be arranged in one of the above network elements.

The bearer selecting means may be arranged to select a new data bearer and to suggest a change to the new bearer to the end terminal. Preferably, the end terminal may be a mobile station of a cellular network. The data bearer may be a CSD bearer, GPRS bearer, USSD bearer, an SMS bearer, a multimedia bearer, an UDI bearer or a modem bearer.

Furthermore, the bearer evaluating means of the network element may be arranged to add a charge information to the data and to initiate a bearer change based on a response received from the end terminal. Furthermore, the bearer evaluating means may be arranged to acquire a network information, which may indicate a network load on different data bearers, and to evaluate the data bearer based on the predetermined bearer selection parameters and the acquired network information. The network elements may comprise a memory for storing the predetermined bearer selection parameters.

In the following, the present invention will be described in greater detail on the basis of a preferred embodiment with reference to the accompanying drawings in which:
Fig. 1 shows a basic block diagram of a network system for supplying a data to an end terminal, according to the preferred embodiment of the present invention;
Fig. 2 shows a basic flow diagram of a data transmission method according to the preferred embodiment of the present invention; and
Fig. 3 shows a basic block diagram of a network element used in the network system according to the present invention.

The preferred embodiment of the present invention will now be described on the basis of a data transmission via a network system comprising a radio access network, e.g. a GSM (Global System for Mobile communication) or UMTS (Universal Mobile Telecommunications System) network, to a mobile terminal.

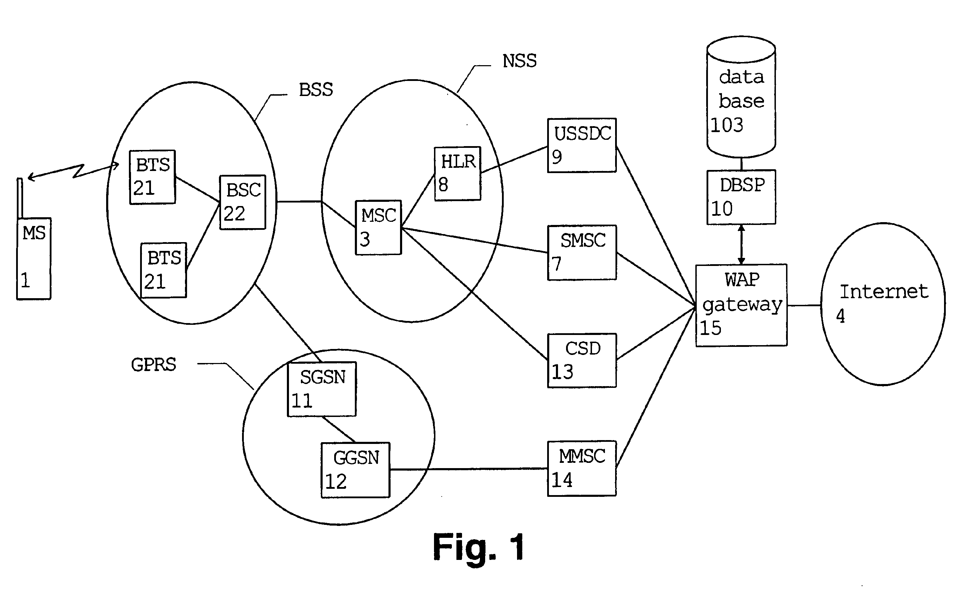

According to Fig. 1, a mobile station (MS) 1 which may comprise a user agent for WAP applications is connected via an air interface to a Base Transceiver Station (BTS) 21 of Base Station Subsystem (BSS) 2 of the radio access network. The user agent may be any browser software or device that interprets a content submitted from a WTA server or any origin server of the Internet 4 connected via a WAP gateway 15. As an example, a user of such a WAP-compliant mobile telephone requests content using a specific URL input at a corresponding MMI (Man Machine Interface). The received content relating to the specific URL is then displayed at a display of the MMI.

Furthermore, the mobile network comprises a Mobile Switching Center (MSC) 3 arranged to perform all switching functions for mobile stations located in a geographical area designated as an MSC area. The MSC 3 takes into account the impact of the allocation of radio resources and mobile nature of the subscribers and has to perform, for example, procedures required for the location registration and procedures required for hand-over of respective mobile stations. The MSC 3 is connected to the BSS 2, which is a sub-system of base station equipment, such as the BTSs 21 and a Base Station Controller (BSC) 22 controlling the BTSs 22, and the like, viewed by the MSC 3 through a single interface.

The MSC 3 may be connected via different paths to the WAP gateway 15 comprising a functionality responsible for encoding and decoding data transferred from and to a mobile client, such as the MS 1. The purpose of encoding the content delivered to the client is to minimize the size of data sent to the client over the air interface as well as to minimize the computational energy required by the client to process the data. The WAP gateway 15 provides a connection to an origin server of a fixed network such as the Internet 4. The origin server responds to a content request from a user agent with the requested data expressed in one of the standard formats known to the user agent, e.g. HTML.

According to the network system shown in Fig. 1, content data may be transmitted from the origin server via the WAP gateway 15, the MSC 3 and the BSS 2 to the MS 1 via a circuit switched data network (CSD) 13 by using a circuit switched data bearer (CSD bearer) or a high speed CSD bearer (HSCSD bearer).

In addition thereto, an USSD (Unstructured Supplementary Service Data) node or USSD center (USSDC) 9 which is connected between the MSC 3 and the WAP gateway 15 is provided in the mobile network, the USSDC 9 enables a communication of data messages, i.e. unstructured data, between the MS 1 and an origin server via the WAP gateway 15. In particular, there may be two ways of connecting the USSDC 9 to the mobile network.

First, as shown in Fig. 1, the USSDC 9 may be connected to the MSC 3 via a Home Location Register (HLR) 8 which is a data base in charge of the management of mobile subscribers. All subscription data are stored there, such as an International Mobile Subscriber Identity (IMSI) and a location information (VLR number) of each MS in order to be able to root calls to the mobile subscribers managed by the HLR 8. A mobile initiated USSD message is then rooted to the HLR 8 via an additional Visitor Location Register (VLR) used for controlling MSs roaming in the MSC area of the MSC 3. The VLR is a data base containing information needed to handle the calls set up or received by the MSs registered therein. Thus, the USSD message takes the following path: MS 1 → BTS 21 → BSC 22 → MSC 3 → HLR 8 → USSDC 9 → WAP gateway 15. A network initiated USSD message takes the opposite path.

Second, the USSDC 9 may be connected to the GSM network directly via the MSC 3. However, in this case, only a mobile initiated USSD is possible. The USSD message is then rooted via the following path: MS 1 → BTS 21 → BSC 22 → MSC 3 → USSDC 9 → WAP gateway 15.

Thus, a USSD bearer can be used as a transparent pipe through the GSM network. In particular, the USSD bearer can be used by operators to provide operator-specific services using a similar transport mechanism as when standard GSM supplementary services are used.

In a similar manner, a GSM short message service (SMS) can be used to provide an additional data bearer to the WAP gateway 15 in order to access an origin server. In GSM SMS, the user data field may comprise just the short message itself or a header in addition to the short message. In this case, the data message is rooted via a respective SMS center SMSC 7 (which may be located at the MSC 3) to the WAP gateway 15.

As a further alternative, a data message can be transmitted via a GPRS (General Packet Radio Services) network, comprising an SGSN (Serving GPRS Support Node) 11 and a GGSN (Gateway GPRS Support Node, not shown either) 12, by using a GPRS bearer. The data message may then be supplied from an origin server of the Internet 4 via the WAP gateway 15 to a Multimedia Switching Center (MMSC) 14 which is arranged to route the data message to the GGSN 12. Then, the data message is routed via the SGSN 11 and the BSS to the MS 1.

It is to be noted that the content may as well be retrieved from a WTA server which is an example origin or gateway server that responds to requests from a WAP client, e.g. the MS 1, directly. The WTA server is used to provide WAP access to features of the wireless network providers telecommunications infrastructure. In contrast thereto, the WAP gateway 15 translates WAP requests to WWW requests thereby allowing the WAP client to submit requests to an any origin server of the Internet 4. The WAP gateway 15 encodes the responses from an origin server into the compact binary format understood by the client.

Hence, according to Fig. 1, a content information may be retrieved from an Internet server by using several optional bearers or routes, e.g. via the USSDC 9, the SMSC 7, the CSD 13 or the MMSC 14.

In addition to the above-described content retrieval operations, a multimedia terminal equipment may be connected via another fixed network such as a PSTN or the like to the MS 1 of the mobile network. At the MSC 3, an interworking unit function (IWF) is provided for adapting protocol features used in the mobile network to protocol features used in the PSTN. The MSC 3 and the IWF may be arranged in a single network element, as shown in Fig. 1.

When the mobile network, e.g. the MSC 3, detects a call request for a multimedia call, a negotiation processing is performed so as to establish a desired bearer or connection type to transmit the multimedia call or message. In particular, the negotiation processing may be ITU-T V.8, V.8bis or V.140 procedure, or the like. Based on this negotiation procedure, a connection via a modem bearer or a UDI bearer, or any other kind of multimedia bearer such as a HSCSD bearer may be established by the IWF.

Accordingly, a plurality of data bearers for supplying multimedia messages or calls and for delivering content information from respective origin servers are provided in the network system shown in Fig. 1.

According to the preferred embodiment, a data bearer selection point (DBSP) 10 is provided for selecting a suitable one of the above or other data bearers. The DBSP 10 may be arranged as a separate network element, or may be incorporated in a network element of the network system. The DBSP 10 reads a required information relating user, service, operator, or network preferences from a data base 103 connected thereto or incorporated therein.

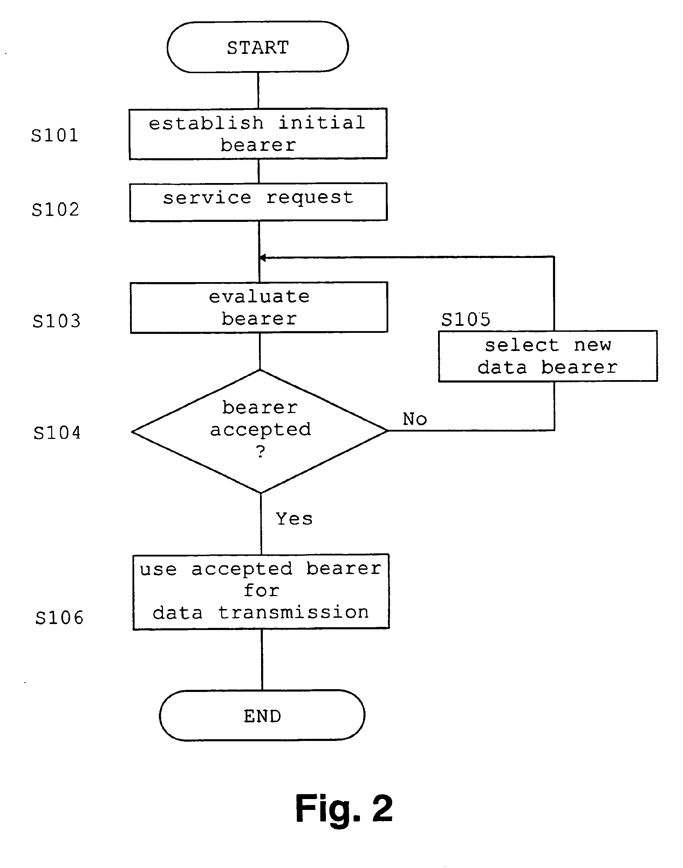

In the following, a data bearer selection operation which may be performed in the DBSP 10 or the MSC 3 is described with reference to the flow diagram shown in Fig. 2. According to Fig. 2, an initial data bearer is established in step S101. Then, a request for a service, such as an establishment of a multimedia call or a delivery of a content information, is issued by the MS 1 or another end terminal of the network system (step S102). Based on the requested service, a data bearer to be used for supplying the respective data is evaluated in step S103.

Then, the acceptance of the data bearer evaluated in step S103 is checked in step S104. If the data bearer is accepted, it is used for performing the data transmission relating to the requested service (step S106). If the data bearer is not accepted in step S104, a new data bearer may be selected (step S105), or, as an alternative, the supply of the data (establishment of the multimedia call, or delivery of the content information) may be rejected, or the initial data bearer may be used, if applicable.

The evaluation or judgment of the data bearer in step S103 may solely be performed in the DBSP 10 of the network system, or may be based on a communication between the DBSP 10 and the MS 1. In the first case, the judgment may be based on a network information, e.g. an information about the network load on the above different data bearers, acquired by the DBSP 10. When a new Web or WAP session is created, or a multimedia call is established, the DBSP 10 defines data bearers for the session. The selection of the data bearer may then be effected by different load values in various network components, derived from the acquired network information, under consideration of predetermined data bearer selection parameters, such as subscription type of the specific end-user of the MS 1, preferences of the WAP or Web service and own preferences of network operator about data bearers. Thereby, the network load and the preferences of the end-user, the service provider and the network operator can be considered in the DBSP 10 in order to provide an optimal data bearer.

In the above second case, where the evaluation of the bearer in step S103 is based on a communication with the MS 1, the user at the MS 1 may be presented with a specific information, such as a charge information, when the provision of the requested service (establishment of the multimedia call, or delivery of a content information) is notified. Then, the DBSP 10 waits for a response, e.g. message accepted or rejected, before using the data bearer for data transmission. Based on the response received from the MS 1, the DBSP 10 or the MSC 3 initiates or rejects the data transmission. Optionally, the DBSP 10 may select a new data bearer and may supply a corresponding notification and charge information to the MS 1.

The charge information may comprise the message size, e.g. 50 kb, and the cost for downloading the message, or the message size, the cost per unit of data transferred (i.e. an unit could be the whole message, or a number of kilobytes/megabytes), wherein the cost for downloading the message may be estimated on the basis of the current network bearer speed.

As an optional feature, a bearer change may be suggested based on the terminal capabilities at the MS 1. For example, the MS 1 may currently be connected via a CSD data bearer, and the DBSP 10 or the MSC 3 may provide an advice that the MS 1 should switch to a less/more expensive bearer depending on the speed at which the user wishes to receive the data (download the message), or any coverage restrictions (e.g. the MS 1 is moving out of a GPRS to a CSD coverage area). The terminal capabilities may relate to the support of protocol features required for establishing a specific data bearer.

The charge information supplied to the MS 1 together with the notification of the requested service may be embodied in the message header or a subject line of the message.

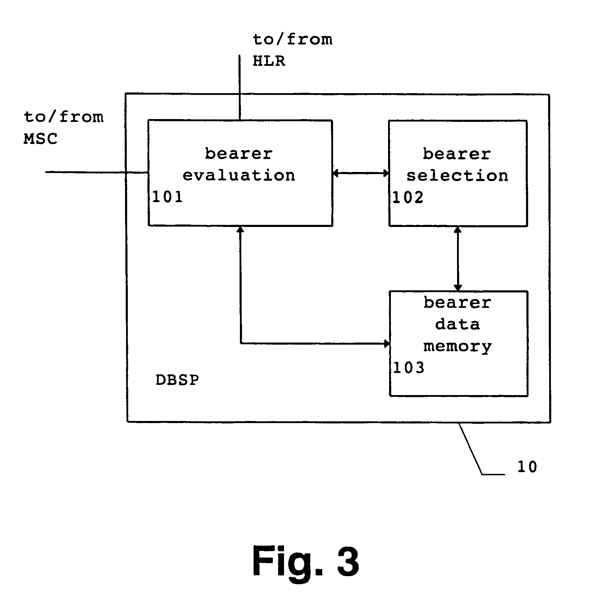

Fig. 3 shows a basic block diagram of the DBSP 10.

According to Fig. 3, the DBSP 10 comprises a bearer evaluation unit 101 arranged to transmit/receive information to/from the HLR 8 (connection not shown) or the MSC 3. The bearer evaluation unit 101 is arranged to acquire a network information such as the network load on specific data bearers via the MSC 3. Furthermore, the bearer evaluation unit 101 may request a subscriber specific information from the HLR 8. The subscriber specific information may relate to the terminal capabilities of the subscribers mobile terminal, a subscription type of the subscriber or any other subscriber information suitable for selecting a corresponding data bearer. Moreover, the bearer evaluation unit 101 may be arranged to receive a service specific information such as preferences of the service, and an operator-specific information, such as preferences of the network operator about the available data bearers, from the network system. The above-described network-, subscriber-, service-, and operator-specific information is stored in a bearer data memory or data base 103 incorporated in the DBSP 10 or arranged as a separate entity (as shown in Fig. 1).

When the request of a specific service is determined by the bearer evaluation unit 101, e.g. based on an information received from MSC 3, the bearer evaluation unit 101 controls a bearer selection unit 102 so as to read the bearer data memory 103 and to select a suitable data bearer based on the terminal capabilities and preferences of the subscriber or the service provider. Then, the bearer evaluation unit 101 evaluates or judges the selected data bearer based on the above-described communication with the MS 1 of the subscriber, when the message size and charge information is available from the service provider, or evaluates or judges the selected data bearer based on the network information (e.g. network load) and the preferences of the network operator.

Based on the above evaluation or judgment, the bearer evaluation unit 101 performs a signalling to the MSC 3 so as to establish the selected data bearer, or to release the connection.

Accordingly, the above-described preferred embodiment enables the selection of an optimal data bearer based on the preferences of the network operator, the subscriber and the service provider under consideration of the current network situation and the terminal capabilities.

It is to be noted, that the present invention may be applied in any telecommunication network or network system in which a selection between a plurality of data bearers is possible. Furthermore, the discrete hardware blocks shown in Fig. 3 may be provided by corresponding program routines controlling a processing unit (e.g. CPU) arranged in the DBSP 10 or the MSC 3. The preferred embodiment of the invention may thus vary within the scope of the attached claims.

In summary, the present invention relates to a data transmission method and network system, in which a data bearer to be used for supplying data is judged, and the data bearer is rejected or accepted in response to the judging result. Furthermore, a new data bearer may be selected and judged. The judging may be performed on the basis of a communication with the end-user or solely at the network side based on predetermined bearer selection parameters. The evaluation of the data bearer may be performed at a data bearer selection point which may be provided as a separate network element. Thus, an optimal data bearer can be selected on the basis of the preferences of a requested service, a network operator, and/or a subscriber, under consideration of a network condition and the capabilities of the end terminal to which the data bearer is to be established. Thereby, a capacity optimization can be achieved.

## Claims

1. A data transmission method for supplying data via a network system, said method comprising the steps of:
a) establishing a connection using an initial data bearer;
b) requesting a service for providing said data;
c) selecting a preferred data bearer to be used for supplying said data;
d) judging said selected data bearer to be used;
e) rejecting or accepting said data bearer in response to the judging result of said judging step, wherein said judging step comprises acquiring a network information and judging said selected data bearer based on predetermined bearer selection parameters and said acquired network information, and wherein said network information indicates a network load on different data bearers, and
f) if said data bearer is accepted, supplying the data using the accepted data bearer.

2. A method according to claim 1, further comprising the steps of selecting a new data bearer and suggesting a change to said new data bearer.

3. A method according to claim 2, wherein said new data bearer is selected based on terminal capabilities at a receiving end.

4. A method according to claim 3, wherein said bearer change is suggested based on a desired downloading speed and/or coverage restrictions.

5. A method according to any one of the preceding claims, wherein said judging step comprises adding a charge information to a notification of said data, and judging said selected data bearer based on said charge information at a receiving end.

6. A method according to claim 5, wherein said charge information comprises a message size and the cost for downloading the message.

7. A method according to claim 5, wherein said charge information comprises a message size and a cost per unit of data transferred.

8. A method according to any one of claims 5 to 7, wherein said charge information is embedded in a header of said message.

9. A method according to any one of the preceding claims, wherein said data is supplied using said selected data bearer if said data bearer is accepted.

10. A method according to claim 1, wherein said predetermined bearer selection parameters indicate a subscription type of an end-user, preferences of the service, and/or preferences of the network operator about bearers.

11. A method according to claim 1 or 10, wherein a change of said selected data bearer is suggested, if said network information or said predetermined bearer selection parameters change.

12. A method according to any one of the preceding claims, wherein said data is a multimedia message.

13. A method according to any one of the preceding claims, wherein said service is a Web service.

14. A network system for supplying data based on a service request from an end terminal **(1),** said network system comprising:
a) bearer judging means **(1, 10)** for judging a data bearer to be used for supplying said data; and
b) bearer selecting means **(10)** for establishing a connection using said data bearer in response to the judging result of said judging means **(1, 10),** wherein said judging means **(10)** is a network element arranged to acquire a network information and to judge said data bearer based on predetermined bearer selection parameters and said acquired network information, and wherein said network information indicates a network load on different data bearers, and wherein data are supplied using the selected data bearer.

15. A network system according to claim 14, wherein said bearer selecting means **(10)** is arranged to select a new data bearer and to suggest a change to said new data bearer to said end terminal **(1).**

16. A network system according to claim 15, wherein said bearer selecting means **(10)** is arranged to select said new data bearer based on terminal capabilities of said end terminal **(1).**

17. A network system according to claim 15 or 16, wherein said bearer selecting means **(10)** is arranged to suggest said bearer change based on a desired downloading speed and/or coverage restrictions.

18. A network system according to any one of claims 14 to 17, wherein said judging means is arranged at said end terminal **(1)** and adapted to judge said data bearer based on a charge information added to said data.

19. A network system according to claim 14, wherein said predetermined bearer selection parameters indicate a subscription type of said end terminal **(1),** preferences of the service and/or preferences of the network operator about bearers.

20. A network system according to claim 14 or 19, wherein said judging means **(10)** is arranged to suggest a change of said data bearer, if said network information or said predetermined bearer selection parameters change.

21. A network system according to claims 14, 19 or 20, wherein said judging means is arranged at a switching center **(3)** of a cellular network.

22. A network system according to any one of claims 14 to 21, wherein said end terminal is a mobile station **(1).**

23. A network system according to any one of claims 14 to 22, wherein said data bearer is a CSD bearer, a GPRS bearer, a USSD bearer, a SMS bearer, a multimedia bearer, a UDI bearer, or a modem bearer.

24. A network element for a network system for supplying data based on a service request to an end terminal **(1),** said network element comprising:
a) bearer judging means **(101)** for judging a bearer to be used for supplying said data; and
b) bearer selecting means **(102)** for selecting a new data bearer based on predetermined bearer selection parameters, wherein said bearer judging means **(101)** is arranged to acquire a network information and to judge said data bearer based on said predetermined bearer selection parameters and said acquired network information, and wherein said network information indicates a network load on different data bearers, and
wherein data are supplied using the selected data bearer.

25. A network element according to claim 24, wherein said predetermined bearer selection parameters indicate a subscriber type of an end-user, preferences of the service and/or preferences of the operator about bearers.

26. A network element according to claim 24 or 25, wherein said bearer judging means **(101)** is arranged to add a charge information to said data and to initiate a bearer change based on a response received from the end terminal **(1).**

27. A network element according to claim 24, 25 or 26, further comprising a memory **(103)** for storing said predetermined bearer selection parameters.

## Patentansprüche

1. Datenübertragungsverfahren zum Zuführen von Daten über ein Netzwerksystem, wobei das Verfahren die Schritte aufweist:
a) Herstellen einer Verbindung unter Verwendung eines initialen Datenträgers;
b) Anfordern eines Dienstes zum Bereitstellen von Daten;
c) Auswählen eines bevorzugten Datenträgers, der zum Zuführen der Daten zu verwenden ist;
d) Beurteilen des ausgewählten zu verwendenden Datenträgers;
e) Ablehnen oder Annehmen des Datenträgers als Reaktion auf das Beurteilungsergebnis des Beurteilungsschritts, wobei der Beurteilungsschritt ein Beschaffen von Netzwerkinformationen und ein Beurteilen des ausgewählten Datenträgers basierend auf vorbestimmten Trägerauswahlparametern und den beschafften Netzwerkinformationen aufweist, und wobei die Netzwerkinformationen eine Netzwerklast auf verschiedenen Datenträgern angeben, und
f) wenn der Datenträger angenommen wird, Zuführen der Daten unter Verwendung des angenommenen Datenträgers.

2. Verfahren gemäß Anspruch 1, weiter mit dem Schritt des Auswählens eines neuen Datenträgers und Vorschlagen eines Wechsels zu dem neuen Datenträger.

3. Verfahren gemäß Anspruch 2, wobei der neue Datenträger basierend auf Gerätefähigkeiten am Empfangsende ausgewählt wird.

4. Verfahren gemäß Anspruch 3, wobei der Trägerwechsel basierend auf einer gewünschten Herunterladegeschwindigkeit und/oder Abdeckungsbegrenzungen vorgeschlagen wird.

5. Verfahren gemäß einem der vorstehenden Ansprüche, wobei der Beurteilungsschritt ein Hinzufügen von Gebühreninformationen zu einer Benachrichtigung der Daten und ein Beurteilen des ausgewählten Datenträgers, basierend auf den Gebühreninformationen, am Empfangsende aufweist.

6. Verfahren gemäß Anspruch 5, wobei die Gebühreninformationen eine Nachrichtengröße und die Kosten zum Herunterladen der Nachricht aufweisen.

7. Verfahren gemäß Anspruch 5, wobei die Gebühreninformationen eine Mitteilungsgröße und Kosten pro Einheit von übermittelten Daten aufweisen.

8. Verfahren gemäß einem der Ansprüche 5 bis 7, wobei die Gebühreninformationen in einem Kopffeld der Nachricht eingebunden sind.

9. Verfahren gemäß einem der vorstehenden Ansprüche, wobei die Daten unter Verwendung des ausgewählten Datenträgers zugeführt werden, wenn der Datenträger angenommen wird.

10. Verfahren gemäß Anspruch 1, wobei die vorbestimmten Trägerauswahlparameter einen Teilnahmetyp eines Endbenutzers, Präferenzen des Dienstes und/oder Präferenzen des Netzwerkbetreibers über Träger angeben.

11. Verfahren gemäß Anspruch 1 oder 10, wobei ein Wechsel des ausgewählten Datenträgers vorgeschlagen wird, wenn die Netzwerkinformationen oder die vorbestimmten Trägerauswahlparameter wechseln.

12. Verfahren gemäß einem der vorstehenden Ansprüche, wobei die Daten eine Multimedianachricht sind.

13. Verfahren gemäß einem der vorstehenden Ansprüche, wobei der Dienst ein Web-Dienst ist.

14. Netzwerksystem zum Zuführen von Daten basierend auf einer Dienstanforderung von einem Endgerät **(1),** wobei das Netzwerksystem aufweist:
a) eine Trägerbeurteilungseinrichtung **(1, 10)** zum Beurteilen eines Datenträgers, der zum Zuführen der Daten zu verwenden ist; und
b) eine Trägerauswahleinrichtung **(10)** zum Herstellen einer Verbindung unter Verwendung des Datenträgers als Reaktion auf das Beurteilungsergebnis der Beurteilungseinrichtung **(1, 10),** wobei die Beurteilungseinrichtung **(10)** ein Netzwerkelement ist, das dazu eingerichtet ist, Netzwerkinformationen zu beschaffen und den Datenträger basierend auf vorbestimmten Trägerauswahlparametern und den beschafften Netzwerkinformationen zu beurteilen, und wobei Daten unter Verwendung des ausgewählten Datenträgers zugeführt werden.

15. Netzwerksystem gemäß Anspruch 14, wobei die Trägerauswahleinrichtung **(10)** dazu eingerichtet ist, einen neuen Datenträger auszuwählen und dem Endgerät **(1)** einen Wechsel zu dem neuen Datenträgers vorzuschlagen.

16. Netzwerksystem gemäß Anspruch 15, wobei die Trägerauswahleinrichtung **(10)** dazu eingerichtet ist, den neuen Datenträger basierend auf Gerätefähigkeiten des Endgeräts **(1)** auszuwählen.

17. Netzwerksystem gemäß Anspruch 15 oder 16, wobei die Trägerauswahleinrichtung **(10)** dazu eingerichtet ist, einen Trägerwechsel basierend auf einer gewünschten Herunterladegeschwindigkeit und/oder Abdeckungsbegrenzungen vorzuschlagen.

18. Netzwerksystem gemäß einem der Ansprüche 14 bis 17, wobei die Beurteilungseinrichtung bei dem Endgerät **(1)** eingerichtet ist und dazu angepasst ist, den Datenträger basierend auf zu den Daten hinzugefügten Gebühreninformationen zu beurteilen.

19. Netzwerksystem gemäß Anspruch 14, wobei die vorbestimmten Trägerauswahlparameter einen Teilnahmetyp eines Endbenutzers, Präferenzen des Dienstes und/oder Präferenzen des Netzwerkbetreibers über Träger angeben.

20. Netzwerksystem gemäß Anspruch 14 oder 19, wobei die Beurteilungseinrichtung **(10)** dazu eingerichtet ist, einen Wechsel des Datenträgers vorzuschlagen, wenn die Netzwerkinformationen oder die vorbestimmten Trägerauswahlparameter wechseln.

21. Netzwerksystem gemäß Anspruch 14, 19 oder 20, wobei die Beurteilungseinrichtung bei einem Schaltzentrum **(3)** eines zellularen Netzwerks eingerichtet ist.

22. Netzwerksystem gemäß einem der Ansprüche 14 bis 21, wobei das Endgerät eine Mobilstation **(1)** ist.

23. Netzwerksystem gemäß einem der Ansprüche 14 bis 22, wobei der Datenträger ein CSD-Träger, ein GPRS-Träger, ein USSD-Träger, ein SMS-Träger, ein Multimedia-Träger, ein UDI-Träger oder ein Modem-Träger ist.

24. Netzwerkelement für ein Netzwerksystem zum Zuführen von Daten, basierend auf einer Dienstanforderung, an ein Endgerät **(1),** wobei das Netzwerkelement aufweist:
a) eine Trägerbeurteilungseinrichtung **(101)** zum Beurteilen eines Datenträgers, der zum Zuführen der Daten zu verwenden ist; und
b) eine Trägerauswahleinrichtung **(102)** zum Auswählen eines neuen Datenträgers basierend auf vorbestimmten Trägerauswahlparametern, wobei die Trägerbeurteilungseinrichtung **(101)** dazu eingerichtet ist, Netzwerkinformationen zu beschaffen und den Datenträger basierend auf vorbestimmten Trägerauswahlparametern und den beschafften Netzwerkinformationen zu beurteilen, und wobei die Netzwerkinformationen eine Netzwerklast auf verschiedenen Datenträgern angeben, und
wobei Daten unter Verwendung des ausgewählten Datenträgers zugeführt werden.

25. Netzwerkelement gemäß Anspruch 24, wobei die vorbestimmten Trägerauswahlparameter einen Teilnahmetyp eines Endbenutzers, Präferenzen des Dienstes und/oder Präferenzen des Netzwerkbetreibers über Träger angeben.

26. Netzwerkelement gemäß Anspruch 24 oder 25, wobei die Trägerbeurteilungseinrichtung **(101)** dazu eingerichtet ist, Gebühreninformationen zu den Daten hinzuzufügen und eine Trägerwechsel basierend auf einer von dem Endgerät **(1)** empfangenen Antwort einzuleiten.

27. Netzwerkelement gemäß Anspruch 24, 25 oder 26, weiter mit einem Speicher **(103)** zum Speichern der vorbestimmten Trägerauswahlparameter.

## Revendications

1. Procédé de transmission de données permettant de transmettre des données par l'intermédiaire d'un système de réseau, ledit procédé comportant les étapes consistant à :
a) établir une connexion en utilisant une porteuse de données initiale ;
b) établir une requête de service afin de transmettre lesdites données ;
c) sélectionner une porteuse de données préférée à utiliser afin de transmettre lesdites données ;
d) juger quelle dite porteuse de données sélectionnée doit être utilisée ;
e) rejeter ou accepter ladite porteuse de données en réponse au résultat de jugement de ladite étape de jugement, dans lequel ladite étape de jugement consiste à acquérir une information de réseau et à juger ladite porteuse de données sélectionnée sur la base des paramètres de sélection de porteuse de données prédéterminée et de ladite information de réseau acquise, et dans lequel ladite information de réseau indique une charge de réseau sur différentes porteuses de données, et
f) si ladite porteuse de données est acceptée, transmettre les données par l'intermédiaire de la porteuse de données acceptée.

2. Procédé selon la revendication 1, comportant en outre les étapes consistant à sélectionner une nouvelle porteuse de données et à suggérer une modification de ladite nouvelle porteuse de données.

3. Procédé selon la revendication 2, dans lequel ladite nouvelle porteuse de données est sélectionnée sur la base des capacités de terminal à une extrémité de réception

4. Procédé selon la revendication 3, dans lequel ladite modification de porteuse est suggérée sur la base d'une vitesse de téléchargement désirée et/ou des restrictions de couverture.

5. Procédé selon l'une quelconque des revendications précédentes, dans lequel ladite étape de jugement comporte les étapes consistant à ajouter une information de charge à une notification desdites données, et à juger ladite porteuse de données sélectionnée sur la base de ladite information de charge à l'extrémité de réception.

6. Procédé selon la revendication 5, dans lequel ladite information de charge comporte un format de message et le coût de téléchargement du message.

7. Procédé selon la revendication 5, dans lequel ladite information de charge comporte un format de message et un coût par unité de données transférée.

8. Procédé selon l'une quelconque des revendications 5 à 7, dans lequel ladite information de charge est intégrée à un en-tête dudit message.

9. Procédé selon l'une quelconque des revendications précédentes, dans lequel lesdites données sont transmises en utilisant ladite porteuse de données sélectionnée si ladite porteuse de données est acceptée.

10. Procédé selon la revendication 1, dans lequel lesdits paramètres de sélection de porteuse prédéterminée indiquent un type d'abonnement d'un utilisateur final, des préférences du service, et/ou des préférences de l'opérateur de réseau concernant les porteuses.

11. Procédé selon la revendication 1 ou 10, dans lequel une modification de ladite porteuse de données sélectionnée est suggérée, si ladite information de réseau ou lesdits paramètres de sélection de porteuse prédéterminée évoluent.

12. Procédé selon l'une quelconque des revendications précédentes, dans lequel lesdites données représentent un message multimédia.

13. Procédé selon l'une quelconque des revendications précédentes, dans lequel ledit service est un service Web.

14. Système de réseau pour transmettre des données sur la base d'une requête de service d'un terminal final (1), ledit système de réseau comportant :
a) des moyens de jugement de porteuse (1, 10) pour juger une porteuse de données à utiliser pour transmettre lesdites données ; et
b) des moyens de sélection de porteuse (10) pour établir une connexion en utilisant ladite porteuse de données en réponse au résultat de jugement desdits moyens de jugement (1, 10), dans lequel lesdits moyens de jugement (10) représentent un élément de réseau disposé pour acquérir une information de réseau et pour juger ladite porteuse de données sur la base de paramètres de sélection de porteuse prédéterminée et de ladite information de réseau acquise, et dans lequel ladite information de réseau indique une charge de réseau sur différentes porteuses de données, et dans lequel les données sont transmises en utilisant la porteuse de données sélectionnée.

15. Système de réseau selon la revendication 14, dans lequel lesdits moyens de sélection de porteuse (10) sont disposés pour sélectionner une nouvelle porteuse de données et pour suggérer une modification de ladite une nouvelle porteuse de données audit terminal final (1).

16. Système de réseau selon la revendication 15, dans lequel lesdits moyens de sélection de porteuse (10) sont disposés pour sélectionner ladite nouvelle porteuse de données sur la base de capacités de terminal dudit terminal final (1).

17. Système de réseau selon la revendication 15 ou 16, dans lequel lesdits moyens de sélection de porteuse (10) sont disposés pour suggérer ladite modification de porteuse sur la base d'une vitesse de téléchargement désirée et/ou des restrictions de couvertures.

18. Système de réseau selon l'une quelconque des revendications 14 à 17, dans lequel lesdits moyens de jugement sont disposés audit terminal final (1) et adaptés pour juger ladite porteuse de données sur la base d'une information de charge ajoutée auxdites données.

19. Système de réseau selon la revendication 14, dans lequel lesdits paramètres de sélection de porteuse prédéterminée indiquent un type d'abonnement dudit terminal final (1), les préférences du service et/ou les préférences de l'opérateur de réseau concernant les porteuses.

20. Système de réseau selon la revendication 14 ou 19, dans lequel lesdits moyens de jugement (10) sont disposés pour suggérer une modification de ladite porteuse de données, si ladite information de réseau ou lesdits paramètres de sélection de porteuse prédéterminée évoluent.

21. Système de réseau selon les revendications 14, 19, ou 20, dans lequel lesdits moyens de jugement sont disposés à un centre de commutation (3) d'un réseau de téléphonie mobile.

22. Système de réseau selon l'une quelconque des revendications 14 à 21, dans lequel ledit terminal final est une station mobile (1).

23. Système de réseau selon l'une quelconque des revendications 14 à 22, dans lequel ladite porteuse de données est une porteuse CSD, une porteuse GPRS, une porteuse USSD, une porteuse SMS, une porteuse multimédia, une porteuse UDI, ou une porteuse de modem.

24. Elément de réseau pour un système de réseau destiné à transmettre des données sur la base d'une requête de service à un terminal final (1), ledit élément de réseau comportant :
a) des moyens de jugement de porteuse (101) pour juger une porteuse de données à utiliser pour transmettre lesdites données ; et
b) des moyens de sélection de porteuse (102) pour sélectionner une nouvelle porteuse de données sur la base de paramètres de sélection de porteuse prédéterminée, dans lequel lesdits moyens de jugement de porteuse (101) sont disposés pour acquérir une information de réseau et pour juger ladite porteuse de données sur la base desdits paramètres de sélection de porteuse prédéterminée et de ladite information de réseau acquise, et dans lequel ladite information de réseau indique une charge de réseau sur différentes porteuses de données, et
dans lequel les données sont transmises en utilisant la porteuse de données sélectionnée.

25. Elément de réseau selon la revendication 24, dans lequel lesdits paramètres de sélection de porteuse prédéterminée indiquent un type d'abonné d'un utilisateur final, des préférences du service, et/ou des préférences de l'opérateur de réseau concernant les porteuses.

26. Elément de réseau selon les revendications 24 ou 25, dans lequel lesdits moyens de jugement de porteuse (101) sont disposés pour ajouter une information de charge auxdites données et pour initier une modification de porteuse sur la base d'une réponse reçue depuis le terminal final (1).

27. Elément de réseau selon la revendication 24, 25 ou 26, comportant en outre une mémoire (103) pour stocker lesdits paramètres de sélection de porteuse prédéterminée.
